# EUROPEAN PATENT APPLICATION

(11) **EP 4 817 419 A1**
(43) Date of publication of application: **07.10.2026**
(21) Application number: 26167752.0
(22) Date of filing: 25.03.2026
(51) Int. Cl.: A23C 20/00, A23D 7/00

(54) **SHAPE-RETAINING O/W TYPE EMULSIFIED FOOD PRODUCT AND METHOD FOR PRODUCING SAME**

(30) Priority: 31.03.2025 JP 2025057873
(71) Applicant: Fuji Oil Co., Ltd., Izumisano-shi, Osaka 598-8540 (JP)
(72) Inventor: TAKEDA, Mariko, Osaka, 5988540 (JP); UETSUKI, Takuma, Osaka, 5988540 (JP); HOSOKAWA, Takuro, Osaka, 5988540 (JP)
(74) Representative: Boult Wade Tennant LLP

(57) **Abstract**

Object

An object of the present invention is to provide a shape-retaining O/W type emulsified food product that achieves both emulsion stability and shape retention even when the content of a dairy product is reduced.

Solution

A shape-retaining O/W type emulsified food product, in which all of the following requirements A) to E) are satisfied: A) a lipid, a carbohydrate, a protein, and water are emulsified in an O/W type; B) the protein content in the food product is from 0.3 to 6 mass%; C) the content of an animal-derived protein (in terms of protein) in the food product is 65 mass% or less relative to the protein content in the food product in B); D) a plant protein hydrolysate having a degree of hydrolysis, expressed as a TCA solubility, of from 3.5 to 45% is contained; and E) a thickening material is contained as a carbohydrate in the food product.

## Description

### Technical Field

The present invention relates to a shape-retaining O/W type emulsified food product and a method for producing the same.

### Background Art

There are various forms of food products in which an aqueous phase and an oil phase are emulsified in an O/W type (oil-in-water type). Among these, there are O/W type emulsified food products in a product form having shape retainability (e.g., plasticity property or plasticity), which are not in a liquid form such as milk or cream. Specific examples thereof include dairy products such as whipped cream, ice cream, various cheeses (e.g., natural cheese and processed cheese), and yogurt; custard cream, and various fillings.

As an example, fresh cheese is a type of natural cheese intended for consumption with little or no aging. Fresh cheese has a lighter cheese smell than aged-type natural cheese, and its fresh taste is enjoyable. Demand for fresh cheese has therefore increased greatly due to its hard texture and the spread of small-packaged types of cheese, which are easy to eat. Among the types of fresh cheese, there are a type of cheese that retains the aroma of milk, has a slight sweet taste, and has a fresh, light sour taste (e.g., cream cheese, fromage blanc, and cottage cheese), and another type of cheese that gives it a less sour taste (e.g., mascarpone and ricotta). Also, fresh cheese has a higher moisture content than aged-type natural cheese and comes in forms ranging from semisolid to paste. Some types of fresh cheese have excellent stretchability and squeezing suitability as a confectionery material. In particular, cream cheese is used in Western-style confectionery such as cheesecake. Fresh cheese is generally produced by subjecting cream or skim milk powder to lactic acid fermentation to form curds, and separating and removing whey from the curds.

There are many problems in dairy products, such as a problem that some people become bored when they continue to eat dairy products because of their strong milk flavor, a problem that dairy products are difficult to eat for people who do not like dairy products, a problem that dairy products cannot be ingested by people who are allergic to milk, an increase in health-oriented consumers, social demands for animal protection, an anxiety about supply of dairy ingredients, and a steep rise in the price of dairy ingredients.

Therefore, it is useful to provide a new type of shape-retaining O/W type emulsified food product in which the amount of dairy products is reduced or no dairy products are used. Consequently, various attempts have been made to produce shape-retaining O/W type emulsified food products such as cheese-like food products, using, for example, a plant material. Specifically, as an ingredient containing a plant protein, a protein derived from beans such as soybean flour (Patent Document 1), soybean milk (Patent Documents 2 and 3), soybean protein isolate (Patent Documents 4 to 6), and fava bean protein (Patent Document 7), nuts such as almond (Patent Documents 8 and 9), and the like have been attempted.

### Citation List

### Patent Document

Patent Document 1: JP H03-067544 A
Patent Document 2: JP S59-006840 A
Patent Document 3: WO 2015/166686
Patent Document 4: JP 2002-186423 A
Patent Document 5: JP 4569630 B
Patent Document 6: JP 2022-166777 A
Patent Document 7: JP 2024-532003 A
Patent Document 8: JP 2022-027689 A
Patent Document 9: US 2002/0071224 A

### Summary of Invention

### Technical Problem

Among commercially available shape-retaining O/W type emulsified food products, there are some types of products in which the shape retainability is enhanced through thickening with a thickening material such as starch, thickening polysaccharide, or agar. The present inventors have confirmed problems that, when the content of milk protein or dairy products is reduced, and a plant protein such as soybean protein is used as an ingredient instead, the emulsification stability is lowered and, in some cases, the shape retainability is also lowered, leading to poor quality in such a food product.

Although shape-retaining O/W type emulsified food products have been proposed in the above Patent Documents, those having both hardness and emulsification stability have not been satisfactorily obtained.

In view of such circumstances, an object of the present invention is to provide a shape-retaining O/W type emulsified food product that maintains both emulsification stability and shape retainability even when the content of a dairy product is reduced.

### Solution to Problem

To solve such a problem, a general solution is to add various emulsifiers in combination. As a result of diligent research to solve the above problems, the present inventors have found that these problems can be solved by adding a plant protein hydrolysate obtained by adjusting the hydrolysis degree to prepare a shape-retaining O/W type emulsified food product without necessarily requiring an emulsifier, thereby completing the present invention.

That is, the present invention includes the following technical ideas:
[1] A shape-retaining O/W type emulsified food product, wherein all of the following requirements A) to E) are satisfied:
   A) the food product contains a lipid, a carbohydrate, a protein, and water, wherein the lipid, the carbohydrate, the protein, and the water are emulsified in an O/W type in the food product;
   B) a protein content in the food product is from 0.3 to 6 mass%;
   C) a content of an animal-derived protein in the food product, on a protein basis, is 65 mass% or less relative to the protein content in the food product as defined in B);
   D) the food product contains a plant protein hydrolysate having a degree of hydrolysis, expressed as a TCA solubility, of from 3.5 to 45%; and
   E) the food product contains a thickening material as the carbohydrate.
[2] The shape-retaining O/W type emulsified food product according to [1], wherein the food product has a lipid content of from 15 to 35 mass%, a carbohydrate content of from 4 to 15 mass%, and a water content of from 50 to 75 mass%.
[3] The shape-retaining O/W type emulsified food product according to [1] or [2], wherein the protein content in the food product is from 1 to 3 mass%.
[4] The shape-retaining O/W type emulsified food product according to any one of [1] to [3], wherein the content of the plant protein hydrolysate defined in D) in the food product, on a protein basis, is 20 mass% or more relative to the protein content in the food product as defined in B).
[5] The shape-retaining O/W type emulsified food product according to any one of [1] to [4], wherein a content of an animal-derived material is 5 mass% or less relative to all materials on a solid basis.
[6] The shape-retaining O/W type emulsified food product according to any of [1] to [5] above, wherein the thickening material defined in E) is a starch.
[7] The shape-retaining O/W type emulsified food product according to [6] above, wherein a content of the starch is from 0.5 to 10 mass%.
[8] The shape-retaining O/W type emulsified food product according to any of [1] to [5] above, wherein the thickening material defined in E) is a thickening polysaccharide or a gelling polysaccharide.
[9] The shape-retaining O/W type emulsified food product according to [8] above, wherein a content of the thickening polysaccharide or the gelling polysaccharide is from 0.05 to 10 mass%.
[10] The shape-retaining O/W type emulsified food product according to any of [1] to [9] above, wherein a content of an emulsifier in the food product is 0.1 mass% or less.
[11] The shape-retaining O/W type emulsified food product according to any of [1] to [10] above, wherein a type of the food product is a cheese-like food product.
[12] A method for producing a shape-retaining O/W type emulsified food product, the method including all of the following steps a) to c):
   a) providing an oil and/or fat, carbohydrate materials, protein materials, and water, wherein
      at least one of the protein materials is a plant protein hydrolysate having a TCA solubility of from 3.5 to 45%, and
      at least one of the carbohydrate materials is a thickening material;
   b) mixing and homogenizing the materials in the step a) to prepare a material liquid; and
   c) thickening the material liquid in the step b).
[13] The method for producing a shape-retaining O/W type emulsified food product according to [12] above, wherein, in the step a), another one of the protein materials is a plant milk.
[14] The method for producing a shape-retaining O/W type emulsified food product according to [12] or [13], the method further including d) acidifying the material liquid.
[15] Use of a plant protein hydrolysate having a degree of hydrolysis, expressed as a TCA solubility, of from 3.5 to 45% in a method for stabilizing emulsification of a shape-retaining O/W type emulsified food product, the method including emulsifying an oil and/or fat, a carbohydrate, a protein, and water in an O/W type and thickening the emulsion to prepare a shape-retaining O/W type emulsified food product, wherein the plant protein hydrolysate having a degree of hydrolysis, expressed as a TCA solubility, of from 3.5 to 45% is mixed as one of protein materials.

### Advantageous Effects of Invention

According to the present invention, it is possible to provide a shape-retaining O/W type emulsified food product that maintains both emulsification stability and shape retention even when the content of a dairy product is reduced.

### Description of Embodiments

Embodiments of the present invention will be described in detail below.

### ■ Shape-Retaining O/W Type Emulsified Food Product

The term "O/W type emulsified food product" in the present invention means a food product in which an aqueous phase and an oil phase are emulsified in an oil-in-water type, i.e., an O/W type. The term "shape retainability" in the present invention means having a property of retaining the shape of an object. More specifically, the term "shape retainability" means having the plasticity property or plasticity in a refrigerated temperature range (from about 0 to 10°C). In an embodiment, the shape-retaining state may be a solid, a semisolid, a paste, or the like. Meanwhile, it cannot be said that a material that is liquid in the refrigerated temperature range has shape retainability.

Specific examples of the types of products corresponding to the shape-retaining O/W type emulsified food products according to an embodiment of the present invention include dairy products such as various cheeses (e.g., natural cheese and processed cheese), yogurt, sour cream, and the like, various fillings such as custard cream, bakery filling, and the like, whipped cream, mayonnaise, pudding, mousse, Bavarian cream, panna cotta, and the like.

In addition, food products in which a part or all of dairy materials, egg materials, and the like are substituted with plant-derived materials, which are in the category of the food products exemplified above, are also examples corresponding to the shape-retaining O/W type emulsified food product according to an embodiment of the present invention. For example, when it comes to cheese, the food product may be referred to as a cheese-like food product. The shape-retaining O/W type emulsified food product according to an embodiment of the present invention may be a fresh cheese-type cheese-like food product, a natural cheese-type cheese-like food product, or the like.

The shape-retaining O/W type emulsified food product according to an embodiment of the present invention contains at least a lipid, a carbohydrate, a protein, and water as components, and in a certain embodiment, contains other components, and these components are emulsified in an O/W type. In an embodiment, the shape-retaining O/W type emulsified food product is produced using plant materials such as a plant oil and/or fat, starch, or a plant protein material as a base.

The term "plant-based" in the present invention does not mean that an animal-derived material is not contained at all, and specifically means that the animal-derived material accounts for less than 50 mass% of all materials. In a more preferred embodiment, the animal-derived material may account for 40 mass% or less, 30 mass% or less, 20 mass% or less, 10 mass% or less, or 5 mass% or less of all materials, in terms of solid content, and further may be 0 mass% as an embodiment of pure plant base.

### ■ Lipid

The shape-retaining O/W type emulsified food product according to an embodiment of the present invention essentially contains a lipid. In an embodiment, the shape-retaining O/W type emulsified food product may contain both a plant-derived lipid and an animal-derived lipid. In an embodiment, the proportion of the plant-derived lipid based on the total lipid of the food product is preferably 30 mass% or more, and may be 40 mass% or more, 50 mass% or more, 60 mass% or more, 70 mass% or more, 80 mass% or more, 90 mass% or more, 95 mass% or more, or 100 mass%.

The lipid content in the shape-retaining O/W type emulsified food product according to an embodiment of the present invention is preferably from 15 to 35 mass%. In an embodiment, the lipid content may be 18 mass% or more, 20 mass% or more, 21 mass% or more, 22 mass% or more, or 23 mass% or more. In an embodiment, the lipid content may be 32 mass% or less, 30 mass% or less, 28 mass% or less, 27 mass% or less, 26 mass% or less, or 25 mass% or less.

The lipid content in the food product can be analyzed by an acid decomposition method, which is an official method, and is determined by basically rounding off to the nearest tenth.

Examples of the lipid material include oils and/or fats, and lipid-containing materials. The material may be a combination of an oil and/or fat and a lipid-containing material in an embodiment.

The oil and/or fat is not particularly limited as long as it is edible. In an embodiment, an oil and/or fat having a slip melting point of from about 20 to 50°C can be used. Examples of the source material of the oil and/or fat include plants such as rapeseed, soybean, sunflower, cottonseed, peanut, rice bran, corn, safflower, olive, kapok, sesame, evening primrose, palm, shea fat, sal fat, cacao fat, coconut, and palm kernel. In an embodiment, a single oil or a mixed oil of the above oils and/or fats, or a processed oil and/or fat obtained by subjecting the oil and/or fat to hydrogenating, fractionation, interesterification, or the like can be used depending on the quality required by those skilled in the art. Also, animal oils and/or fats, such as milk fat, beef tallow, lard, fish oil, and whale oil, can be used as long as the gist of the present invention is not impaired.

The lipid-containing material may be a lipid-containing plant protein material such as plant milk as described below, in an embodiment.

### ■ Carbohydrate

The shape-retaining O/W type emulsified food product according to an embodiment of the present invention essentially contains a carbohydrate.

The carbohydrate content in the shape-retaining O/W type emulsified food product according to an embodiment of the present invention is preferably from 4 to 15 mass%. In an embodiment, the carbohydrate content may be 5 mass% or more, 6 mass% or more, 7 mass% or more, or 8 mass% or more. In an embodiment, the carbohydrate content may be 13 mass% or less, 12 mass% or less, 11 mass% or less, or 10 mass% or less.

The carbohydrate content in a food product is a value calculated by subtracting the contents of water, protein, lipid, and ash (by a direct ashing method) from a sample.

### ∘ Thickening Material

Further, the shape-retaining O/W type emulsified food product according to an embodiment of the present invention essentially contains a thickening material as one of the carbohydrate materials.

In an embodiment, the thickening material is a starch. The inclusion of starches forms the body of the shape-retaining O/W type emulsified food product, and can impart syneresis resistance during refrigerated storage, shape retainability during refrigerated storage, shape retainability after baking, and the like. Specific examples of the starches include various starches such as unprocessed raw starch, acid-treated starch, and pregelatinized starch, which are obtained from corn, rice, potato, tapioca, wheat, sweet potato, and the like; and processed starches such as distarch phosphate, acetylated distarch phosphate, oxidized starch, starch acetate, hydroxypropyl starch, hydroxypropyl distarch phosphate, and starch sodium octenylsuccinate, which are obtained by processing the starches. Those skilled in the art can appropriately select one or two or more types of starches, as long as the starches used have a thickening function.

In this case, the content of the starches in the shape-retaining O/W type emulsified food product according to an embodiment of the present invention can be appropriately adjusted by those skilled in the art, depending on the required quality, but is preferably from 0.5 to 10 mass%. In addition, the content may be from 1 to 8 mass%, from 1.5 to 6 mass%, from 2 to 5 mass%, or the like.

In an embodiment, the thickening material is a dietary fiber. The dietary fiber having a thickening function is used in combination with starch or used instead of starch. Specific examples of the dietary fiber include insoluble dietary fibers such as soybean dietary fibers, crystalline cellulose, and carboxymethyl cellulose; and thickening polysaccharides or gelling polysaccharides such as water-soluble soybean polysaccharides, locust bean gum, guar gum, and agar. In this case, the content of the dietary fiber in the shape-retaining O/W type emulsified food product according to an embodiment of the present invention can be appropriately adjusted by those skilled in the art, depending on the required quality, but is preferably from 0.05 to 10 mass%. In addition, the content may be from 0.5 to 8 mass%, from 1 to 6 mass%, from 3 to 5 mass%, or the like.

In an embodiment, the thickening material may be a combination of the starches and dietary fibers described above. In this case, the contents of the starch and the dietary fiber can be appropriately set by those skilled in the art in consideration of the thickening function of each material.

### ∘ Other Saccharides and the Like

The material of the carbohydrate contained in the shape-retaining O/W type emulsified food product according to an embodiment of the present invention may include saccharides that do not contribute as a thickening material or a saccharide-containing material. The material may be a combination of saccharides and a saccharide-containing material in an embodiment.

Specific examples of the saccharides include monosaccharides or oligosaccharides such as fructose, glucose, sugar, maltose, lactose, trehalose, starch syrup, coupling sugar, honey, isomerized sugar, invert sugar, oligosaccharides (e.g., isomaltooligosaccharide, reduced xylooligosaccharide, reduced gentiooligosaccharide, xylooligosaccharide, gentiooligosaccharide, nigerooligosaccharide, the and eoligosaccharide, and soybean oligosaccharide); sugar alcohols such as maltitol, erythritol, sorbitol, palatinite, xylitol, lactitol, and reduced starch syrup; and water-soluble polysaccharides such as dextrins at varying decomposition levels, indigestible dextrins, polydextrose, and inulin.

The material containing saccharides may be a carbohydrate-containing plant protein material, such as plant milk, as described below, in an embodiment.

### ■ Protein

The shape-retaining O/W type emulsified food product according to an embodiment of the present invention essentially contains a protein.

The protein content in the shape-retaining O/W type emulsified food product according to an embodiment of the present invention is from 0.3 to 6 mass%. In an embodiment, the protein content may be 0.5 mass% or more, 1 mass% or more, 1.3 mass% or more, 1.6 mass% or more, 1.8 mass% or more, 2 mass% or more, or 2.2 mass% or more. In an embodiment, the protein content may be 5.5 mass% or less, 5 mass% or less, 4.5 mass% or less, 4.2 mass% or less, 4 mass% or less, 3.7 mass% or less, 3.5 mass% or less, 3.2 mass% or less, 3 mass% or less, or 2.8 mass% or less.

The protein content in the food product can be analyzed by the Kjeldahl method, which is an official method. Specifically, the protein content is determined by representing the mass of nitrogen measured by the Kjeldahl method with respect to the weight of a food product dried at 105°C for 12 hours by "mass%" as the protein content of the dried material, and by basically rounding off to the nearest tenth. The nitrogen conversion coefficient is 6.25.

The protein in the shape-retaining O/W type emulsified food product according to an embodiment of the present invention may contain both a plant-derived protein and an animal-derived protein. In an embodiment, the content of an animal-derived protein (in terms of protein) in the food product is 90 mass% or less, and may be 80 mass% or less, 70 mass% or less, 65 mass% or less, 60 mass% or less, 50 mass% or less, 40 mass% or less, 30 mass% or less, 20 mass% or less, 10 mass% or less, 5 mass% or less, or 0 mass%, relative to the protein content in the food product.

### ■ Animal-Derived Protein

The materials of the animal-derived protein are concentrated or isolated protein materials, and examples thereof include whey protein concentrate (WPC), cheese whey, casein salt, acid casein, rennet casein, milk protein, milk protein peptide, raw milk, cow's milk, skim milk, fresh cream, concentrated milk, evaporated milk, sweetened evaporated milk, whole milk powder, skim milk powder, and butter milk powder. Other examples of the material of the animal-derived protein include materials containing proteins such as cow's milk, whole egg, egg albumen, and egg yolk.

### ■ Plant-Derived Protein

The materials of the plant-derived protein are concentrated or isolated protein materials, and powdered proteins such as protein concentrates and protein isolates can be used. The types of plants are not limited, but examples thereof include legumes represented by soybeans, peas, fava beans, and chickpeas; seeds represented by almonds, hazelnuts, cashew nuts, coconuts, walnuts, peanuts, pistachios, and hemp; and cereals represented by rice and oats. These can be mixed and used in appropriate proportions.

Other examples of the plant-derived protein materials include protein-containing materials, such as plant milk and plant powder. Since plant milk contains carbohydrate and lipid in addition to protein, it can be a source of carbohydrate and lipid in the shape-retaining O/W type emulsified food product. When plant milk, such as soymilk, is used as an material, for example, a typical soymilk can be used which is obtained through water extraction from soybeans, such as whole soybeans or defatted soybeans, and removal of soy pulp as insoluble fibers. A liquid in a slurry form, instead of soymilk, can also be used in which soy pulp is finely ground without separating the soy pulp from the soymilk. As one aspect of the plant milk, a low-fat plant milk or a high-fat plant milk cream can also be used.

### ■ Plant Protein Hydrolysate

The shape-retaining O/W type emulsified food product according to an embodiment of the present invention essentially contains a plant protein hydrolysate as one of the protein materials. It is important that the plant protein hydrolysate is decomposed to a certain hydrolysis degree. The hydrolysis degree of the plant protein hydrolysate is expressed by the 0.22 M trichloroacetic acid solubility (hereinafter referred to as "TCA solubility") as an index. The TCA solubility is determined by measuring the proportion of proteins soluble in 0.22 M trichloroacetic acid relative to the total proteins by the Kjeldahl method for a dispersion prepared by dispersing a sample in water so as to have a protein content of 1.0 wt.% and thoroughly stirring the dispersion. It is known that the value of the TCA solubility increases as the hydrolysis of the protein proceeds.

Specifically, a TCA solubility is determined by adding an equal volume of 0.44 M trichloroacetic acid (TCA) to a 2 mass% aqueous solution of a protein material to yield a 0.22 M TCA solution, and measuring the proportion of the soluble nitrogen by the Kjeldahl method.

The plant protein hydrolysate used in an embodiment of the present invention has characteristics of having a hydrolysis degree of from 3.5 to 45% as a TCA solubility. In an embodiment, the hydrolysis degree of the hydrolysate may be 4% or more, 6% or more, 6.5% or more, 7% or more, 8% or more, 9% or more, 10% or more, 10.5% or more, 11% or more, 12% or more, 14% or more, or 15% or more. The higher the hydrolysis degree of the hydrolysate, the better the emulsification stability of the shape-retaining O/W type emulsified food product tends to be.

In an embodiment, the hydrolysis degree of the hydrolysate may be 40% or less, 35% or less, 30% or less, 28% or less, 26% or less, 21% or less, 18% or less, 17% or less, 16% or less, 15% or less, 13% or less, 12% or less, 11% or less, 10% or less, or 9% or less. The lower the hydrolysis degree of the hydrolysate, the better the shape retainability of the shape-retaining O/W type emulsified food product tends to be at a refrigerated temperature.

The plant protein hydrolysate having a desired TCA solubility may be obtained by, for example, subjecting a protein material to enzymatic decomposition, acid hydrolysis, or alkali decomposition, or a commercially available product may be used.

The content of the plant protein hydrolysate in the shape-retaining O/W type emulsified food product is particularly preferably 20 mass% or more, in terms of the amount of protein, relative to the protein content in the food product. In an embodiment, the content is 30 mass% or more, 40 mass% or more, 50 mass% or more, 55 mass% or more, 60 mass% or more, 70 mass% or more, 80 mass% or more, 90 mass% or more, 95 mass% or more, or 100 mass%. The higher the content, the better the emulsification stability of the shape-retaining O/W type emulsified food product tends to be.

In an embodiment, the flavor of the shape-retaining O/W type emulsified food product can be improved by using other protein materials such as plant milk in combination within such a range that the effect of adding the plant protein hydrolysate is not impaired. This allows those skilled in the art to appropriately adjust the balance between the shape-retaining O/W type emulsified food product and the flavor. In an embodiment, those skilled in the art can appropriately adjust the balance between the emulsification stability and the hardness at a refrigerated temperature of the shape-retaining O/W type emulsified food product by using two or more plant protein hydrolysates having different hydrolysis degrees in combination. In an embodiment of this combination system, at least one of the two or more plant protein hydrolysates satisfies the above range of the hydrolysis degree. In another embodiment of this combination system, all the plant protein hydrolysates satisfy the above range of the hydrolysis degree.

### ■ Water

The shape-retaining O/W type emulsified food product according to an embodiment of the present invention contains water.

The water content in the shape-retaining O/W type emulsified food product according to an embodiment of the present invention is preferably from 50 to 75 mass%. In an embodiment, the water content may be 53 mass% or more, 55 mass% or more, 57 mass% or more, 58 mass% or more, 59 mass% or more, or 60 mass% or more. In an embodiment, the water content may be 72 mass% or less, 70 mass% or less, 68 mass% or less, 66 mass% or less, or 65 mass% or less. The components in the food product excluding water are referred to as "solid content".

Examples of water include potable water and water-containing materials. In an embodiment, the material may be a combination of potable water and a water-containing material.

The water-containing material may be the above-described protein material, a carbohydrate material, or other materials.

### ■ Oil-in-Water Type Emulsification (O/W Emulsification)

The shape-retaining O/W type emulsified food product according to an embodiment of the present invention is an oil-in-water type emulsion (O/W emulsion) in which a lipid, a carbohydrate, a protein, and water are emulsified in an oil-in-water type in the above-described composition.

As the emulsification method, a method of mixing the above-described materials, which is used in general production, can be employed. In an embodiment, a homogenizing device such as a homogenizer can be used. In an embodiment, pre-emulsification may be performed with a device such as a homo mixer.

### ■ pH

The shape-retaining O/W type emulsified food product according to an embodiment of the present invention has a pH of from 3 to 7.

In an embodiment, the pH range may be 3.5 or higher, 4 or higher, 4.5 or higher, or 5 or higher. In addition, in some embodiments, the pH range may be 6.9 or less, 6.5 or less, 6 or less, 5.9 or less, 5.8 or less, 5.7 or less, 5.6 or less, or 5.5 or less.

The pH range is a matter of design for those skilled in the art, and those skilled in the art can appropriately adjust the pH range according to the product type and form of the shape-retaining O/W type emulsified food product.

### ∘ Acidification

In an embodiment, the shape-retaining O/W type emulsified food product can be made into a cheese-flavored or yogurt-flavored product, and in such a case, the pH can be acidified to from 3 to 6.

In an embodiment, the pH adjustment for acidification can be performed by adding an organic acid to the mixed liquid of the materials of the shape-retaining O/W type emulsified food product. Examples of the organic acid that can be used include citric acid, lactic acid, malic acid, fumaric acid, gluconic acid, and phytic acid.

In an embodiment, the pH adjustment for acidification can be performed by subjecting the mixed liquid of the materials of the shape-retaining O/W type emulsified food product to lactic acid fermentation. In this case, the lactic acid fermentation can be performed at 15 to 45°C using a lactic acid bacteria starter until the pH reaches the pH range above.

In an embodiment, the pH adjustment by acidification can also be performed by subjecting the mixed liquid of the materials to lactic acid fermentation, followed by final addition of an alkali, an organic acid, an inorganic acid, or the like.

### ■ Additional Materials

To the shape-retaining O/W type emulsified food product according to an embodiment of the present invention, an additional material, in addition to the materials described above, can be added according to a desired quality of the product, or an additional material does not need to be added.

### ∘ Emulsifier

For the shape-retaining O/W type emulsified food product according to an embodiment of the present invention, use of an emulsifier is unhindered to such an extent that does not interfere with the flavor. The emulsifier can be used as long as it is approved with the explicit purpose of emulsification as a food additive, and examples thereof include lecithin, sucrose fatty acid esters, propylene glycol fatty acid esters, sorbitan fatty acid esters, glycerin fatty acid esters, polyglycerin fatty acid esters; various organic acid monoglycerides, such as acetic acid monoglyceride, tartaric acid monoglyceride, acetic acid-tartaric acid mixed monoglyceride, citric acid monoglyceride, diacetyl tartaric acid monoglyceride, and lactic acid monoglyceride; and polyoxyethylene sorbitan fatty acid esters.

In an embodiment, the shape-retaining O/W type emulsified food product according to an embodiment of the present invention contains little or no emulsifier. Specifically, the content of the emulsifier in the shape-retaining O/W type emulsified food product may be 0.1 mass% or less, 0.05 mass% or less, 0.02 mass% or less, 0.01 mass% or less, or 0 mass%.

According to an embodiment of the present invention, it is advantageous to produce a shape-retaining O/W type emulsified food product having high emulsification stability without using an emulsifier.

In addition to the above, for the shape-retaining O/W type emulsified food product according to an embodiment of the present invention, an aroma agent, such as a milky flavor, a cheese flavor, caramel flavor, or a fruit flavor; seasoning such as common salt, spices of various types; or a fruit puree or a jam can be used to impart a flavor. A sweetener, such as sucralose, aspartame, or stevia, can be used to impart sweetness, and a colorant, such as beta-carotene, a paprika pigment, or an annatto dye, can be used for coloring. A shelf life improver, such as glycine, sodium acetate, or egg white lysozyme, can also be used to extend the shelf life.

### ■ Production Aspect

Another aspect of the present invention is a method for producing a shape-retaining O/W type emulsified food product, which includes the following steps a) to c).
a) Providing an oil and/or fat, carbohydrate materials, protein materials, and water. Here, at least one of the protein materials is a plant protein hydrolysate having a TCA solubility of from 3.5 to 45%. Here, at least one of the carbohydrate ingredients is a thickening material.; b) mixing and homogenizing the materials in the step a) to prepare a liquid material; and c) thickening the liquid material in the step b).

The shape-retaining O/W type emulsified food product according to an embodiment of the present invention can be subjected to the following steps.

### a. Material Provision Step

The various materials described above can be provided by purchasing or self-producing. The plant protein hydrolysate can be purchased by selecting a product having a corresponding TCA solubility from "FUJIPRO" series, "NEW FUJIPRO" series, "PROLINA" series, and the like, available from Fuji Oil Co., Ltd.

### b. Mixing Step

Various materials are charged into a production tank, mixed with a stirrer, and then homogenized using a homogenizing device such as a homogenizer to prepare a material liquid emulsified in an O/W type.

### c. Thickening Step

The material liquid is thickened. Thickening can be caused by gelatinization of carbohydrate, dispersion or dissolution of dietary fiber or thickening polysaccharide, solidification of oil and/or fat, emulsification of oil and/or fat, dissolution of protein, aggregation of protein when pH is lowered, cooling of a material liquid, or the like. As a result of the thickening, the resultant O/W type emulsified food product is prepared in a paste form, a semisolid form, or a solid form, and a product having shape retainability can be produced.

### d. Acidification Step

In an embodiment in which the shape-retaining O/W type emulsified food product is made into a cheese-flavored or yogurt-flavored product, an acidification step can be added.

When the acidification step is performed by fermentation, for example, the lactic acid bacteria starter is added to the material liquid prepared in the step b. while adjusting the temperature of the material liquid to a temperature suitable for fermentation, and the material liquid is fermented until the pH reaches a set value. The fermented liquid is then heat-sterilized to stop the fermentation to prepare an acidified liquid. The temperature of the heat sterilization is preferably from 70 to 95°C. As an alternative to some or all of this fermentation step, an acid may be added to adjust the pH. The resultant acidified solution may be homogenized again using a homogenizing device, if necessary.

### ■ Emulsification Stabilization

Another aspect of the present invention is a method for stabilizing the emulsification of a shape-retaining O/W type emulsified food product, in which in the production of a shape-retaining O/W type emulsified food product obtained by emulsifying an oil and/or fat, a carbohydrate, a protein, and water in an O/W type and thickening the emulsion, a plant protein hydrolysate having a hydrolysis degree of from 3.5 to 45% as a TCA solubility is mixed as one of protein materials.

A further aspect of the present invention is use of a plant protein hydrolysate having a hydrolysis degree of from 3.5 to 45% as a TCA solubility in a method for producing a shape-retaining O/W type emulsified food product or a method for stabilizing emulsification thereof, wherein the method includes emulsifying an oil and/or fat, a carbohydrate, a protein, and water in an O/W type, and thickening the emulsion to prepare a shape-retaining O/W type emulsified food product, and the plant protein hydrolysate having a hydrolysis degree of from 3.5 to 45% as a TCA solubility is mixed as one of protein materials.

The timing of mixing the protein materials is not particularly limited, and may be, for example, during the preparation of the mixed liquid of various materials in the step a, after the preparation of the acidified liquid in the step d, before cooling, or the like in the production process described in the above production aspect. This can stabilize the emulsification of the shape-retaining O/W type emulsified food product and prevent syneresis during the production process or after the production.

### Examples

Examples will be shown below, and details of the present invention will be more specifically described. In the examples, values in "part" or "%" are all expressed on a mass basis.

### Comparative Example 1: Preparation of Fresh Cheese-Like Food Product

As an embodiment of the shape-retaining O/W type emulsified food product, a fresh cheese-like food product was prepared by the following steps.
a) The materials (oil and/or fat, carbohydrate materials, protein materials, water, and others) were provided according to the formulation shown in Table 1.
b) The respective materials were mixed while adjusting the temperature to 55°C, and then homogenized under a pressure of 5 MPa using a homogenizer to prepare a mixed liquid. Next, a lactic acid bacteria starter was added in an amount of 0.01% with respect to the mixed liquid, and fermentation was performed until the pH was lowered to 5.3 while adjusting the temperature to 37°C, to thereby prepare a fermentation liquid. The mixed liquid was thickened by this fermentation step.
c) The resulting fermented liquid was heat sterilized in a tank equipped with a kneader while stirring at 80°C for 1 minute to prepare a sterilized liquid. In this step, the starch was gelatinized to further thicken the fermented liquid. The sterilized liquid was then homogenized using a homogenizer at a pressure of 10 MPa. This step further thickened the sterilized liquid.
d) Thereafter, the food product was transferred from the tank to a storage container and cooled to a refrigerated temperature (5°C) to produce a fresh cheese-like food product. The homogenized liquid was greatly thickened by this cooling.

**[Table 1]**

| Materials | | Amount formulated (parts) |
|---|---|---|
| Plant oil and/or fat (palm olein oil) *1 | | 24.3 |
| Unadjusted soymilk *2 | | 19.3 |
| Dextrin | | 5.1 |
| Modified starch (distarch phosphate) *3 | | 4.0 |
| Sugar | | 0.7 |
| Common salt | | 0.6 |
| Water | | Balance |
| Total | | 100.0 |

| Component composition | | |
|---|---|---|
| | Lipid content (%) | 24.9 |
| | Carbohydrate content (%) | 9.5 |
| | Protein content (%) | 0.8 |
| | Water content (%) | 64.2 |

| | | |
|---|---|---|
| *1: "Palm Ace 10" (available from Fuji Oil Co., Ltd.) *2: "Hokkaido Soybeans, Unadjusted Soy Milk" (available from Kikkoman Corporation); Protein of 4.3%, lipid of 3.3%, carbohydrate of 2.1%, and water of 90%) *3: "Starch No. 100" (available from Nippon Starch Chemical Co., Ltd.) | | |

### ∘ Method of Quality Evaluation

### · Emulsification Stability

The emulsification stability of the produced fresh cheese-like food product was evaluated as follows.

In the step d), when the prepared fresh cheese-like food product was transferred from the tank to the storage container, the state of the liquid adhering to the bottom surface of the tank was observed to confirm the presence or absence of emulsification stability. The rating was made as follows, and a score of 3 or higher was considered passed.

Score 5: The sterilized liquid is uniformly adhered to the bottom surface of the tank, and there is no separation of oil.

Score 4: The sterilized liquid is almost uniformly adhered to the bottom surface of the tank, but there is a trace of unevenness.

Score 3: The sterilized liquid adheres to the bottom surface of the tank, but it has a slight unevenness, which is within an allowable range.

Score 2: The sterilized liquid is slightly adhered to the bottom surface of the tank, but that is considerably uneven, which is out of the allowable range.

Score 1: The sterilized liquid hardly adheres to the bottom surface of the tank, and the oil is clearly separated.

### · Shape Retainability

The fresh cheese-like food products produced in the preparation step described above were stored at a refrigerated temperature (5°C) for 24 hours, and then the hardness (unit: g/78.5 mm²) was measured using a rheometer "Texture Analyzer CT3" available from Brookfield Engineering Laboratories, Inc. The hardness was measured under conditions of a product temperature of 5°C, a circular plunger of 10 mm-diameter, and a table speed of 0.8 mm/s. The rating was made as follows, and a score of 2 or higher was considered passed.
Score 3: Hardness of 40 g or more
Score 2: Hardness of 15 g or more and less than 40 g
Score 1: Hardness of less than 15 g

### ∘ Results and Discussion

The ratings for Comparative Example 1 were score 1 for the emulsification stability and score 1 for the shape retainability.

The fresh cheese-like food product produced in Comparative Example 1 was in a state in which oil was clearly separated and emulsification was extremely insufficient. Also, the fresh cheese-like food product of Comparative Example 1 had no shape retention, and the hardness failed to be measured with a rheometer.

Consequently, the formulation in Table 1 for Comparative Example 1 did not satisfy the product quality of the fresh cheese-like food product.

### Comparative Example 2: Addition of Soybean Protein Isolate

A fresh cheese-like food product was prepared in the same manner as in Comparative Example 1, except that 1.9 parts of a soybean protein isolate "FUJIPRO F" (protein content in solid content: 91%, TCA solubility: 2.9%) was added to the formulation in Table 1 for Comparative Example 1, and the same amount of water was reduced. The resultant fresh cheese-like food product had a lipid content of 24.9%, a protein content of 2.5%, a carbohydrate content of 9.5%, and a water content of 62.4%. These were evaluated for quality in the same manner as in Comparative Example 1.

### ∘ Results and Discussion

The ratings for Comparative Example 2 were score 2 for the emulsification stability and score 3 for the shape retainability (hardness of 50 g).

The state of the sterilized liquid of Comparative Example 2 was slightly improved as compared with Comparative Example 1, and the shape retainability was excellent, resulting in passed. However, the emulsification stability was still insufficient. Therefore, the product quality of the fresh cheese-like food product was still insufficient when it comes to the emulsification stability by only adding about 2% of the soybean protein isolate to Comparative Example 1 to increase the protein content. When the soybean protein isolate was added in an amount of about 6%, which is three times the original amount added, the emulsification stability unexpectedly deteriorated, and the rating of the emulsification stability was score 1 (Comparative Example 2-2).

### Reference Example: Addition of Caseinate

A fresh cheese-like food product was prepared in the same manner as in Comparative Example 1, except that the soybean protein isolate was replaced with potassium caseinate "TATUA500" (protein content: 91.2%, water: 4%) in the formulation of Comparative Example 2. The resultant fresh cheese-like food product had a lipid content of 24.9%, a protein content of 2.6%, a carbohydrate content of 9.5%, and a water content of 62.2%, and the content of animal-derived protein in the food product (in terms of protein) was 68% relative to the protein content in the food product.

For this, the product was evaluated for quality in the same manner as in Comparative Example 1, and the ratings were score 5 for the emulsification stability and score 2 for the shape retainability with a hardness of 23 g, indicating that the emulsification stability was particularly excellent. Thus, emulsification stability problems did not occur in the formulation system, which was mainly composed of milk-derived proteins.

### Test Example 1: Addition of Soybean Protein Hydrolysates Having Various Hydrolysis Degrees

In view of the results of Comparative Examples 1 and 2, the soybean protein isolate formulated in Comparative Example 2 was a normal type that was not enzymatically decomposed, and the TCA solubility was as low as 2.9%. Therefore, soybean protein hydrolysates having various hydrolysis degrees (TCA solubility) shown in Table 2 were examined. All of these samples are available from Fuji Oil Co., Ltd.

Fresh cheese-like food products were prepared in the same manner as in Comparative Example 1, except that soybean protein hydrolysates having the protein content and hydrolysis degree shown in Table 2 were used in place of the soybean protein isolate, in Comparative Example 2. The amount of each soybean protein hydrolysate formulated was adjusted to the same as the protein content (2.5%) of Comparative Example 2.

The resultant fresh cheese-like food product had a content of soybean protein hydrolysate of 66.3% in terms of the amount of protein based on the total amount of protein. For this, the product was evaluated for quality in the same manner as in Comparative Example 1, and the results are shown in Table 3 and compared with those of Comparative Examples 1 and 2.

**[Table 2]**

| **Test No.** | **Soybean protein hydrolysate** | **Water (%)** | **Protein (%)** | **TCA solubility (%)** |
|---|---|---|---|---|
| Comparative Example 1 | Not added | - | - | - |
| Comparative Example 2 | FUJIPRO F | 5.0 | 86.5 | 2.9 |
| T1 | SP-A | 5.4 | 85.4 | 3.7 |
| T2 | SP-B | 5.5 | 80.0 | 8.4 |
| T3 | SP-C | 4.6 | 88.3 | 11.9 |
| T4 | Test sample | 3.9 | 85.3 | 15.6 |
| T6 | SP-E | 6.2 | 86.4 | 24.0 |
| T7 | SP-F | 4.6 | 87.7 | 28.4 |
| T8 | SP-G | 4.0 | 87.7 | 39.1 |
| T9 | SP-H | 3.8 | 87.0 | 100 |

| | | | | |
|---|---|---|---|---|
| *Soybean protein hydrolysate (product SP-A to G): All products available from Fuji Oil Co., Ltd. were used. *Soybean protein hydrolysate (Test sample): A test sample produced by the same method as that for the product SP-B, except that the time for enzymatic decomposition was changed to increase only the hydrolysis degree. | | | | |

**[Table 3]**

| **Test No.** | **Emulsion stability (Score)** | **Shape retainability** | |
|---|---|---|---|
| | | **Hardness (g/78.5 mm²)** | **(Score)** |
| Comparative Example 1 | 1 | - | 1 |
| Comparative Example 2 | 2 | 50 | 3 |
| T1 | 3 | 71 | 3 |
| T2 | 4 | 58 | 3 |
| T3 | 4 | 46 | 3 |
| T4 | 5 | 44 | 3 |
| T6 | 5 | 59 | 3 |
| T7 | 5 | 39 | 2 |
| T8 | 5 | 32 | 2 |
| T9 | 1 | 11 | 1 |

The results in Table 3 show that, unexpectedly, the higher the hydrolysis degree of the soybean protein hydrolysate, the greater the emulsification stability of the fresh cheese-like food product tends to be. Meanwhile, when the hydrolysis degree was too high, the shape retainability tended to decrease. From the above results, the fresh cheese-like food products produced in Tests T1 to T8 were passed as product qualities. Test T9 had poor shape retention, and the hardness measurement with the rheometer was difficult, possibly because of the excessively high hydrolysis degree.

### Test Example 2: Change in Amount of Soybean Protein Hydrolysate Formulated

Fresh cheese-like food products were prepared in the same manner as in Comparative Example 1, except that the SP-E formulation proportion (1.9%), which is a soybean protein hydrolysate having a TCA solubility of 24.0%, in the formulation of T6 in Test Example 1 was changed to 0.7%, 0.9%, and 1.4%, respectively. The resultant fresh cheese-like food products were evaluated in the same manner as in Comparative Example 1, and the results are shown in Table 4.

**[Table 4]**

| | T10 | T11 | T12 | T6 |
|---|---|---|---|---|
| SP-E Formulation Proportion (%) | 0.7 | 0.9 | 1.4 | 1.9 |
| Protein content (%) | 1.4 | 1.6 | 2.0 | 2.5 |
| Content of soybean protein hydrolysate (%) * | 42.1 | 48.4 | 59.3 | 66.3 |
| Emulsion stability (Score) | 5 | 5 | 5 | 5 |
| Shape retainability (Hardness) | 17 | 17 | 26 | 59 |
| Shape retainability (Score) | 2 | 2 | 2 | 3 |

| | | | | |
|---|---|---|---|---|
| *Calculated in terms of the amount of protein per protein content of cheese-like food product | | | | |

### Example 1: Formulation of Other Plant Milks

A fresh cheese-like food product was prepared in the same manner as in Comparative Example 1, except that oat milk was formulated instead of soy milk in the formulation of the test T6 in Test Example 1. The resultant fresh cheese-like food product had a lipid content of 24.4%, a protein content of 1.8%, a carbohydrate content of 10.1%, and a water content of 63.0%, and the content of the soybean protein hydrolysate in the food product (in terms of protein) was 91.4% relative to the protein content in the food product.

For this, the product was evaluated for quality in the same manner as in Comparative Example 1, and the ratings were score 5 for the emulsification stability and score 2 for the shape retainability with a hardness of 35.5 g.

### Example 2: Non-Fermented Plant-Based Cheese-Like Food Product

A fresh cheese-like food product was prepared in the same manner as in Comparative Example 1, except that lactic acid was added to adjust the pH to 5.3 instead of adding lactic acid bacteria for fermentation in the formulation of the test T6 in Test Example 1. The component composition of the resultant fresh cheese-like food product was equivalent to that of T6.

For this, the product was evaluated for quality in the same manner as in Comparative Example 1, and the ratings were score 5 for the emulsification stability and score 2 for the shape retainability with a hardness of 36.0 g.

### Example 3: Change of pH

Fresh cheese-like food products were produced in the same manner as described above, except that the pH was adjusted to 3, 4, 6, and 7, respectively in the formulation of Example 2. Although the flavor changed with pH, the evaluations of the emulsification stability and the shape retention were the same as in Example 2. The physical properties of the shape-retaining O/W type emulsified food product were hardly affected by pH.

## Claims

1. A shape-retaining O/W type emulsified food product, wherein all of the following requirements A) to E) are satisfied:
A) the food product contains a lipid, a carbohydrate, a protein, and water, wherein the lipid, the carbohydrate, the protein, and the water are emulsified in an O/W type in the food product;
B) a protein content in the food product is from 0.3 to 6 mass%;
C) a content of an animal-derived protein in the food product, on a protein basis, is 65 mass% or less relative to the protein content in the food product as defined in B);
D) the food product contains a plant protein hydrolysate having a degree of hydrolysis, expressed as a TCA solubility, of from 3.5 to 45%; and
E) the food product contains a thickening material as the carbohydrate.

2. The shape-retaining O/W type emulsified food product according to claim 1, wherein the food product has a lipid content of from 15 to 35 mass%, a carbohydrate content of from 4 to 15 mass%, and a water content of from 50 to 75 mass%.

3. The shape-retaining O/W type emulsified food product according to claim 1 or 2, wherein the protein content in the food product is from 1 to 3 mass%.

4. The shape-retaining O/W type emulsified food product according to any one of claims 1 to 3, wherein the content of the plant protein hydrolysate defined in D) in the food product, on a protein basis, is 20 mass% or more relative to the protein content in the food product as defined in B).

5. The shape-retaining O/W type emulsified food product according to any one of claims 1 to 4, wherein a content of an animal-derived material is 5 mass% or less relative to all materials on a solid basis.

6. The shape-retaining O/W type emulsified food product according to any one of claims 1 to 5, wherein the thickening material defined in E) is a starch.

7. The shape-retaining O/W type emulsified food product according to claim 6, wherein a content of the starch is from 0.5 to 10 mass%.

8. The shape-retaining O/W type emulsified food product according to any one of claims 1 to 5, wherein the thickening material defined in E) is a thickening polysaccharide or a gelling polysaccharide.

9. The shape-retaining O/W type emulsified food product according to claim 8, wherein a content of the thickening polysaccharide or the gelling polysaccharide is from 0.05 to 10 mass%.

10. The shape-retaining O/W type emulsified food product according to any one of claims 1 to 9, wherein a content of an emulsifier in the food product is 0.1 mass% or less.

11. The shape-retaining O/W type emulsified food product according to any one of claims 1 to 10, wherein a type of the food product is a cheese-like food product.

12. A method for producing a shape-retaining O/W type emulsified food product, the method comprising all of the following steps a) to c):
a) providing an oil and/or fat, carbohydrate materials, protein materials, and water, wherein at least one of the protein materials is a plant protein hydrolysate having a TCA solubility of from 3.5 to 45%, and
at least one of the carbohydrate materials is a thickening material;
b) mixing and homogenizing the materials in the step a) to prepare a material liquid; and
c) thickening the material liquid in the step b).

13. The method for producing a shape-retaining O/W type emulsified food product according to claim 12, wherein, in the step a), another one of the protein materials is a plant milk.

14. The method for producing a shape-retaining O/W type emulsified food product according to claim 12 or 13, the method further comprising d) acidifying the material liquid.

15. Use of a plant protein hydrolysate having a degree of hydrolysis, expressed as a TCA solubility, of from 3.5 to 45% in a method for stabilizing emulsification of a shape-retaining O/W type emulsified food product, the method comprising:
emulsifying an oil and/or fat, a carbohydrate, a protein, and water in an O/W type; and
thickening the emulsion to prepare a shape-retaining O/W type emulsified food product, wherein
the plant protein hydrolysate having a degree of hydrolysis, expressed as a TCA solubility, of from 3.5 to 45% is mixed as one of protein materials.
